Europäisches Patentamt

European Patent Office

Office européen des brevets

(11) Publication number: **0 605 369 A1**

## EUROPEAN PATENT APPLICATION

(21) Application number: **93830496.1**

(51) Int. Cl.5: **G01L 5/04**

(22) Date of filing: **10.12.93**

(30) Priority: **30.12.92 IT TO921053**

(43) Date of publication of application:
**06.07.94 Bulletin 94/27**

(84) Designated Contracting States:
**DE ES FR GB SE**

(71) Applicant: **COMAU S.p.A.**
**Via Rivalta 30**
**I-10095 Grugliasco (Torino)(IT)**

(72) Inventor: **Zadra, Allessandro**
**Via Vincenzo Lancia 138/2**
**I-10141 Torino(IT)**

(74) Representative: **Notaro, Giancarlo et al**
**c/o Buzzi, Notaro & Antonielli d'Oulx srl,**
**Corso Fiume 6**
**I-10133 Torino (IT)**

(54) **Method and device for checking the tension of a stretched elastic element, particularly a transmission belt.**

(57) The tension of a stretched elastic element (1), particularly a transmission belt, is checked by giving an impulse to the elastic element (1) so as to cause a vibration thereof in a direction orthogonal to its length and by analysing the vibration thus obtained in order to determine the tension. The vibration analysis is performed by checking the displacement with the time of at least a portion of the elastic element (1) in the direction of the vibration, with the aid of a laser metering device (9, 10, 11).

Fig. 1

The present invention relates to a method and a device for checking the tension of a stretched elastic element, particularly a transmission belt.

A check operation of the above indicated type is necessary for example during all production processes of machines using transmission belts, wherein it is necessary to provide a predetermined tension of the belt in order to obtain good performance of the machine. An example of this situation is the check operation of the tension of a driving belt for a camshaft for an internal combustion engine. Upon mounting of the belt, it is always necessary to check the degree of tension thereof. Indeed, on one hand a too high tension may cause a rapid wear and then the failure of the belt, whereas on the other hand, a reduced tension may cause slippage of the belt, which usually is a toothed belt, with respect to the toothed pulleys on which it is drawn. Therefore, it is generally necessary to perform the said check operation on every engine going out of the production line and to adjust again the tension on those engines which are rejected as a consequence of the check operation.

At present, there is being already used in the automotive industry a checking process of the above indicated type, wherein an impulse is given by a tool to the belt so as to cause a vibration thereof in a direction orthogonal to its length, and wherein this vibration is analysed to determine the tension of the belt. More specifically, according to the technique which is presently being used, the analysis of the vibration caused in the belt is performed by analysing the noise generated by this vibration by means of two microphones arranged on the two sides of the run of the belt which is caused to vibrate. From the analysis of the generated noise, it is possible to evaluate the frequence of the vibration, whose square is proportional to the tension of the belt. In general, indeed, for a stretched elastic element having length $l$, having a mass for length unit $m$, the tension $T$ thereof is related to frequence $f$ of the vibration by the following equation:

$$T = 4f^2 \, l^2 \, m$$

Therefore, by analysing noise of the vibration it is possible, by determining the frequence of the vibration, to evaluate the tension.

The said known method, however, has the drawback to be relatively inaccurate (the margin of precision is in the order of 10%) and it can be applied only on a relatively reduced frequence range (e.g. it cannot be worked out for vibrations whose frequence is below 30 Hz). Furthermore, the process is usually carried out in an environment which is not acustically isolated, where outside noises can take place (for example the noise of a fork lift truck passing the workshop area where the analysis is being performed) which give raise to big difficulties in performing the check operation.

In view of overcoming all the said drawbacks, the present invention provides a method for checking the tension of a stretched elastic element, particularly a transmission belt, wherein an impulse is given to the elastic element so as to cause a vibration thereof in a direction orthogonal to its length, and wherein this vibration is analysed to determine the tension of the elastic element, characterised in that the analysis of the vibration caused in the elastic element is performed by checking the displacement with the time of at least a portion of the elastic element in the direction of the vibration with the aid of a metering laser device.

Therefore, the analysis of the vibration is performed optically, rather than acoustically, so as to avoid the inaccuracy and the relevant margins of error of the known system.

In the case of application to the check operation of the tension of a transmission belt engaged around a plurality of pulleys, the method can be carried out on any straight run of the belt by means of a respective laser meter, so as to allow an average value to be determined among the tensions determined for the various runs, which is representative of the belt tension.

The method according to the invention can be applied easily also on automatic assembling lines.

Naturally, the invention also provides the device for carrying out the said method.

The analysis of the signals emitted by the laser meter or the laser meters is preferably carried out automatically by means of an electronic processing unit which also can be used, in the case of an automatic assembling line, to signal the products to be rejected and to be sent to an area where the tension can be adjusted again.

In a preferred embodiment, wherein the tension is checked of a transmission belt drawn around a plurality of pulleys, with every straight run of the belt there is associated a laser device and the said analysis is carried out for each run, the tension values determined for the various runs being then used to compute an average tension value of the belt. Preferably, in this embodiment, the impulse which causes the vibration of the belt is given by a jet of pressurised air.

Further features and advantages of the invention will appear from the following description with reference to the annexed drawings, given purely by way of non limiting example, wherein:

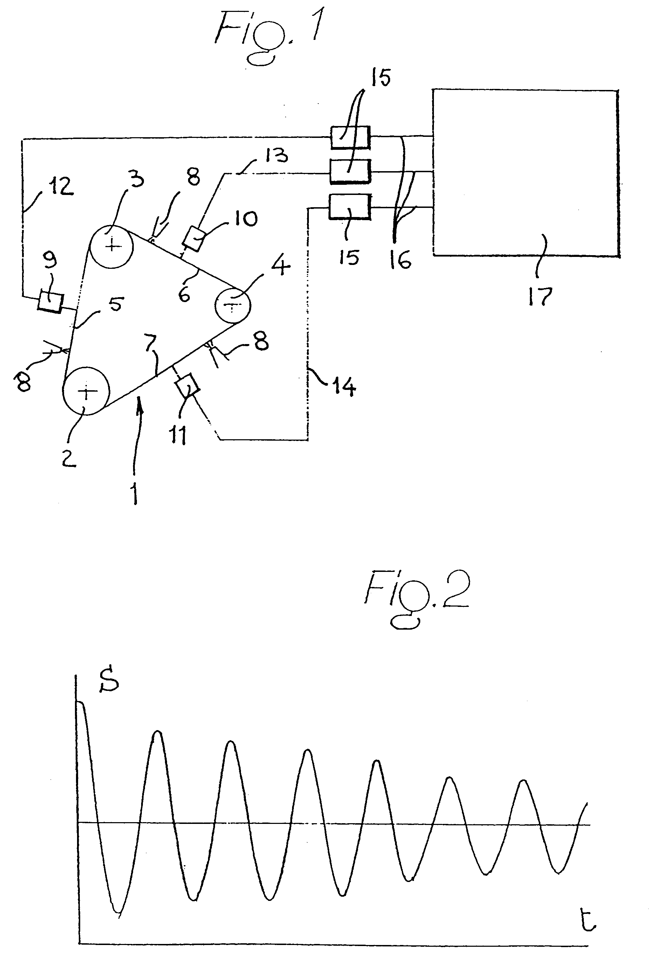

figure **1** is a diagram of a device according to the invention, and

figure **2** is a diagram which shows the dumped oscillation of a belt run undergone to the analysis with the device according to the invention.

With reference to the drawings, numeral 1 generally designates a transmission belt, for example a driving belt for the camshaft of an internal combustion engine, typically a rubber toothed belt, engaged around three toothed pulleys 2, 3, 4. The tension of the three runs 5, 6, 7 of the belt 1 is computed by giving an impulse to each run by a pressurised air jet coming from a nozzle 8, so as to cause a vibration of every run in the direction orthogonal to its length. The vibrations thus obtained are analysed by three laser devices for distance measurement indicated respectively by reference numerals 9, 10, 11. According to a technique known per se, each such device emits a laser beam in the direction of the respective belt run and receives the energy reflected by the belt itself. On the basis of the received response, the device is able to determine the distance of the belt run from said device, providing an electric output signal responsive to such measurement, which is supplied to a line respectively indicated by 12, 13, 14. The signals supplied to lines 12, 13, 14 qualitatively are of the type illustrated in figure 2 as a function of the time, which is typical of a dumped oscillation. The three lines 12, 13, 14 lead to three frequence meters 15 which provide output signals, through three lines 16, indicating the frequence of the vibration caused in the three runs of the belt. Such signals are supplied to an electronic processing unit 17 which can be made as a PLC or a personal computer able to process such signals and to determine, on the basis of the measured frequence, the value of the tension of each of the three belt runs, to check that this value belongs to a predetermined acceptable range and finally to compute the average value of the three determined tensions, which is considered as being representative of the tension of the belt.

According to the invention, the same electronic processing unit is able to compare the measured average value with a predetermined value or a range of predetermined values which is considered acceptable. If the measured value is outside the acceptable range, the unit can be arranged to provide a signal serving to deroute automatically the rejected product towards an area where the tension of the belt is adjusted to bring the same within the acceptable limits.

As it has already been indicated above, this method is particularly advantageous in the case of automatic assembling of internal combustion engines, where the tension of the driving belt of the camshaft must be adjusted precisely to avoid an early failure of the belt during engine operation, or a slippage thereof with respect to the pulleys.

Naturally, the principle of the invention remaining the same, the details of construction and the embodiments may widely vary with respect to what has been described and illustrated purely by way of example, without departing from the scope of the present invention.

## Claims

1. A method for checking the tension of a stretched elastic element, particularly a transmission belt (1), wherein an impulse is given to the elastic element (5, 6, 7) so as to cause a vibration thereof in a direction orthogonal to its length, and wherein this vibration is analysed to determine the tension, characterised in that the analysis of the vibration caused in the elastic element (5, 6, 7) is performed by checking the displacement with the time of at least a portion of the elastic element in the direction of the vibration, with the aid of a laser metering device (9, 10, 11).

2. A method according to claim 1, wherein this method is applied to the check operation of the tension of a transmission belt drawn around a plurality of pulleys (2, 3, 4) characterised in that with every straight run (5, 6, 7) of the belt (1) there is associated a laser device (9, 10, 11) and that said analysis is carried out for each run, and that the tension values determined for the various runs are used to compute an average value of the tension of the belt.

3. A method according to claim 1, characterised in that the impulse which causes the vibration of the elastic element is given by an impulsing jet of pressurised air.

4. A method according to claim 1, characterised in that once the tension of the elastic element is determined, this tension is compared with a range of acceptable values of the tension to generate a signal in case the measured value is outside said range.

5. Device for checking the tension of a stretched elastic element (1), particularly a transmission belt, comprising means (8) to give an impulse to the elastic element (1) so as to cause a vibration thereof in a direction orthogonal to its length, and means to analyse this vibration in order to determine the tension of the elastic element (1), characterised in that said means for analysing the vibration comprises a laser metering device (9, 10, 11) able to check the displacement with the time of at least a portion of the elastic element (1) in the direction of the vibration.

6. Device according to claim 5, for use in the check operation of the tension of a transmission belt (1) engaged around a plurality of pulleys (2, 3, 4), characterised in that with each straight run (5, 6, 7) of the transmission belt (1) there is associated a laser device (9, 10, 11) and that there are provided electronic processing means (15, 17) for receiving the output signals from the laser devices (9, 10, 11) to determine the frequences of oscillation of the runs (5, 6, 7) of the belt on the basis of said output signals and for computing the value of tension of said runs on the basis of the frequences thus determined and finally to determine the average value of the computed tensions.

7. Device according to claim 6, characterised in that said electronic processing means (17) are able to compare said average value of tension of the transmission belt with a range of acceptable values and to emit a signal in the case said determined value is outside said range.

*Fig. 1*

*Fig.2*

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 477 942 (SONY CORPORATION) | 1,3-5 | G01L5/04 |
| Y | * page 3, line 42 - line 48; figure 1 * | 1,3-5 | |
| Y | WO-A-90 15974 (LOUGHBOROUGH CONSULTANTS LIMITED) <br> * abstract; figures * | 1,3-5 | |
| Y | PATENT ABSTRACTS OF JAPAN <br> vol. 12, no. 160 (M-697)(3007) 14 May 1988 <br> & JP-A-62 278 352 (MITSUBISHI MOTORS CORP) <br> 3 December 1987 <br> * abstract * | 1,3-5 | |
| Y | GB-A-2 127 544 (RHONE-POULENC FIBRES) <br> * abstract; figures * | 1,3-5 | |
| Y | US-A-3 850 031 (W. SCHWENZFEIER ET AL.) <br> * column 6, line 12 - line 41; claims 1,2; figure 11 * | 1,3-5 | |
| P,Y | EP-A-0 520 845 (RENAULT AUTOMATION) <br> * the whole document * | 1,4 | TECHNICAL FIELDS SEARCHED (Int.Cl.5) <br><br> G01L |

The present search report has been drawn up for all claims

| Place of search | Date of completion of the search | Examiner |
|---|---|---|
| THE HAGUE | 30 March 1994 | Van Assche, P |

EPO FORM 1503 03.82 (P04C01)